(19) Europäisches Patentamt

European Patent Office

Office européen des brevets

(11) **EP 1 057 515 A1**

(12) **EUROPÄISCHE PATENTANMELDUNG**

(43) Veröffentlichungstag:
06.12.2000 Patentblatt 2000/49

(51) Int. Cl.$^{7}$: **B01D 46/44**, G01N 15/08,
G01M 3/20, B01D 65/10,
B01D 29/60, F24F 3/16

(21) Anmeldenummer: 00109857.3

(22) Anmeldetag: 10.05.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **21.05.1999 DE 19923502**

(71) Anmelder: **KRANTZ - TKT GmbH**
**51465 Bergisch Gladbach (DE)**

(72) Erfinder:
• **Fronhöfer, Markus, Dr.-Ing.**
**52072 Aachen (DE)**

• **Halupczok, Johann, Dr.-Ing.**
**52070 Aachen (DE)**
• **Sodec, Franc, Dr.-Ing.**
**52146 Würselen (DE)**
• **Martinsteg, Hans, Dipl.-Ing.**
**52159 Roetgen (DE)**
• **Weisssiecker, Horst, Dipl.-Phys.**
**51789 Lindlar (DE)**

(74) Vertreter:
**Bauer, Dirk, Dipl.-Ing. Dipl.-Kfm.**
**Bauer & Bauer,**
**Patentanwälte,**
**Am Keilbusch 4**
**52080 Aachen (DE)**

(54) **Verfahren und Vorrichtung zur Bestimmung des Abscheidegrades einer in Betrieb befindlichen Filteranordnung**

(57)     Bei einem Verfahren zur Bestimmung des Abscheidegrades einer im Betrieb befindlichen Filteranordnung (9) zur Abscheidung von Aerosolen aus einem Gasvolumenstrom wird in Strömungsrichtung (4) des Gasvolumenstroms betrachtet vor der Filteranordnung (9) die Partikelkonzentration $c_1$ des Rohgases und in Strömungsrichtung (4) des Gasvolumenstromes hinter der Filteranordnung (9) die Partikelkonzentration $c_2$ des Reingases gemessen. Aus den beiden vorgenannten Konzentrationen wird der Abscheidegrad A nach der Formel

$$A = 1 - \frac{c_2}{c_1}$$

bestimmt. Um Aussagen über lokale Schwankungen in der Filtereffizienz sowie über eventuelle Undichtigkeiten des Dichtsitzes treffen zu können, wird vorgeschlagen, die Aufnahme eines Teilvolumenstroms des Reingases mittels eines Absaugelements (11) durchzuführen, das während eines vollständigen Meßvorgangs mindestens den gesamten Strömungsquerschnitt überstreicht. Ferner wird eine Vorrichtung zur Durchführung dieses Verfahrens vorgeschlagen.

Fig. 1

**Beschreibung**

Die Erfindung betrifft ein Verfahren zur Bestimmung des Abscheidegrades einer in Betrieb und/oder in ihrer Einbauposition befindlichen Filteranordnung zur Abscheidung von Aerosolen aus einem Gasvolumenstrom, wobei in Strömungsrichtung des Gasvolumenstroms betrachtet vor der Filteranordnung die Partikelkonzentration $c_1$ des Rohgases und in Strömungsrichtung des Gasvolumenstroms betrachtet hinter der Filteranordnung die Partikelkonzentration $c_2$ des Reingases gemessen und aus den beiden vorgenannten Konzentrationen der Abscheidegrad A nach der Formel

$$A = 1 - \frac{c_2}{c_1}$$

bestimmt wird. Des weiteren betrifft die Erfindung eine Vorrichtung zur Durchführung des vorgenannten Verfahrens.

Mit dem eingangs beschriebenen Verfahren sollen in Betrieb und/oder in ihrer Einbauposition befindliche Filteranordnungen auch nach ihrem Einbau regelmäßig auf ihre Funktionsfähigkeit überprüft werden. Eine Überprüfung ist deshalb von Bedeutung, weil mit Hilfe derartiger Filteranordnungen oft gefährliche Bestandteile aus Abgasen entfernt werden sollen, beispielsweise in der Kerntechnik, oder die Einhaltung besonderer Reinraumbedingungen, wie zum Beispiel im Gesundheitswesen oder bei der Halbleiterproduktion, sichergestellt werden soll. Die Filteranordnungen bestehen in der Regel aus einer Mehrzahl von Filterelementen, die bankweise oder wandartig nebeneinander angeordnet werden. Auch ist die Parallelschaltung mehrerer Filterbänke oder Filterwände möglich. Die Filterelemente besitzen häufig die Form eines Quaders oder Zylinders. Sie werden nach ihrer Produktion im Herstellerwerk einer gründlichen Qualitätskontrolle unterzogen, so daß zu diesem Zeitpunkt die Erreichung eines von der Filteranordnungsbauart abhängigen Abscheidegrades gewährleistet werden kann. Derartige Filterelemente haben unter Umständen eine recht hohe Nutzungsdauer, weshalb nach einer gewissen Zeit seit ihrem Einbau zuverlässige Aussagen über die Filtereffizienz, den Filterdichtsitz und die Filterintegrität ohne besondere Überprüfung nicht getroffen werden können.

Bei Anlagen, die Aerosole aus Rohgasvolumenströmen ausfiltern, erfolgt eine Online-Überwachung der in Betrieb befindlichen Filteranordnungen in einfacher Weise oft dadurch, daß ein Vergleich der Partikelkonzentrationen, die in Strömungsrichtung betrachtet vor und hinter der Filteranordnung entnommen werden, durchgeführt wird. Die Entnahme der in einer Meßeinrichtung zu analysierenden Probenvolumenströme erfolgt dabei gewöhnlich in einiger Entfernung von der Filteranordnung an einer meist zentralen Stelle des Strömungsquerschnitts.

Aus dem Prospekt „Schwebstoffiltergehäuse" der Firma H. Krantz GmbH & Co., Luft- und Wärmetechnik, ist des weiteren eine Methode bekannt, bei der eine Filterdichtheits- und Dichtsitzprüfung nach dem sogenannten Ölfadentest durchgeführt wird. Diese Überprüfung erfolgt während des Betriebs der Filteranordnungen, wobei in Strömungsrichtung vor der Filteranordnung mit Hilfe eines tragbaren Ölnebelerzeugers ein Prüfmedium in Form eines Ölnebels in den zu filternden Volumenstrom eingeführt wird. In dem Filtergehäuse befindet sich ein Prüffenster, durch das die Filteranordnung und deren Dichtsitz auf der Reinluftseite gut eingesehen werden können. Undichtigkeiten im Filtermedium oder der Abdichtung zeigen sich im Licht einer Prüflampe, mit der durch das Prüffenster in das Innere des Filtergehäuses geleuchtet wird, deutlich als weiße Ölfäden vor dem dunklen Hintergrund der Gehäuseinnenwand.

Obwohl sich das vorbeschriebene Prüfverfahren über Jahrzehnte in der Praxis bestens bewährt hat, sucht man heute nach Möglichkeiten, quatitative Aussagen über die Wirksamkeit von in Betrieb befindlichen Filteranordnungen zu machen.

Der Erfindung liegt die Aufgabe zugrunde, ein Verfahren und eine Vorrichtung zur Bestimmung des Abscheidegrades einer in Betrieb und/oder in ihrer Einbauposition befindlichen Filteranordnung zur Abscheidung von Aerosolen aus einem Gasvolumenstrom vorzuschlagen, mit dem bzw. der sich eine ständige Überwachung der Filteranordnung durchführen und dabei quanitative Aussagen über den Abscheidegrad treffen lassen.

Ausgehend von einem Verfahren der eingangs beschriebenen Art wird diese Aufgabe erfindungsgemäß dadurch gelöst, daß die Aufnahme eines Teilvolumenstroms des Reingases mittels eines Absaugelements erfolgt, das während eines vollständigen Meßvorgangs mindestens den gesamten Strömungsquerschnitt überstreicht.

Da die gesamte Querschnittsfläche von dem Absaugelement überstrichen und somit sämtliche Stromlinien des Reingases erfaßt werden, stützt sich die Auswertung nicht lediglich wie beim Stand der Technik auf einen kleinen und unveränderlichen Bereich des Strömungsquerschnitts. Auch bei inhomogener Konzentrationsverteilung kann auf diese Weise der tatsächliche Mittelwert der Konzentration gemessen werden.

Um unmittelbare Rückschlüsse auf einzelne Filterelemente ziehen zu können, ist es vorteilhaft, wenn das Absaugelement in geringem Abstand von einer Reingasaustrittsebene der Filteranordnung bewegt wird. Sofern die Möglichkeit besteht, in Strömungsrichtung möglichst dicht hinter dem Filterelement das Absaugelement anzuordnen, läßt sich nicht nur eine Aussage über die durchschnittliche Wirksamkeit der gesamten Filteranordnung treffen, sondern es lassen sich auch über die Rohgasaustrittsebene lokale Schwankungen in der Filtereffizienz feststellen. So können beispielsweise örtlich eng umgrenzte Undichtigkeiten ebenso festgestellt werden wie eine Leckage im Bereich einer Seite des Dichtsitzes, sofern das Absaugelement auch Bereiche außerhalb des eigentlichen Abströmquerschnitts des Reingases überstreicht.

Das erfindungsgemäße Prüfverfahren arbeitet somit nach Art eines Scanning-Verfahrens, bei dem der gesamte Abströmquerschnitt des Filterelements nacheinander von einem lediglich eine vergleichsweise Meine Querschnittsfläche aufweisenden Absaugelement abgefahren wird. Bei hinreichend geringer Scan-Geschwindigkeit in Verbindung mit einer ausreichend schnellen Meßtechnik lassen sich auf diese Weise lokale Abscheidegrade der Filterelemente in quantitativer Weise bestimmen. Eine Integration dieser lokalen Abscheidegrade über die gesamte Querschnittsfläche der Filteranordnung ergibt den durchschnittlichen Abscheidegrad des Filterelements.

Als besonders vorteilhaft ist es dabei anzusehen, wenn das Absaugelement linear - insbesondere mit konstanter Geschwindigkeit - bewegt wird. Sofern die Aufnahme des zu messenden Teilvolumenstroms des Reingases in das Absaugelement isokinetisch erfolgt und das Absaugelement den Abströmquerschnitt nur wenig versperrt, kommt es zu keiner Störung des typischen Strömungsbildes des Filterelements, auch wenn die Abströmseite von dem Absaugelement in dichtem Abstand überfahren wird. Die isokinetische Absaugung zeichnet sich dadurch aus, daß die Austrittsgeschwindigkeit des Reingases aus dem Filterelement mit der Eintrittsgeschwindigkeit des Prüfvolumenstroms in das Absaugelement übereinstimmt.

Gemäß einer Ausgestaltung der Erfindung ist vorgesehen, daß ein an einer Dichtung des Filterelements vorbeitretender ungefilterter Volumenstrom in bestimmten Stellungen des Absaugelements von diesem aufgenommen wird. Eine Überprüfung der Funktionsfähigkeit des Filterdichtsitzes läßt sich bei einem schienenförmigen Absaugelement zum einen dadurch erzielen, daß die Schiene länger als die diesbezügliche Länge des Filterelementquerschnitts ist, und zum anderen dadurch, daß der Verfahrweg der Schiene zwischen deren Endstellungen größer ist als die in diese Richtung zu messende Breite des Filterelementquerschnitts.

Eine Weiterbildung des Verfahrens gemäß der Erfindung besteht darin, daß die von mehreren Absaugelementen oder von strömungstechnisch getrennten Sektionen eines Absaugelements aufgenommenen Teilvolumenströme nacheinander und getrennt voneinander einer Meßeinrichtung zugeführt werden.

Eine solche Verfahrensweise ist insbesondere bei Anordnungen von Filterelementen zu Filterwänden sinnvoll, da die bei einer ungeteilten Ausführung eines einzigen Absaugelements online zu analysierenden Volumenströme für gebräuchliche Meßgeräte zu groß wären und das Orten einer eventuellen Leckage erschwert wäre. Durch die erfindungsgemäß vorgeschlagene separate und zeitlich voneinander getrennte Analyse verschiedener Bereiche der Filterwand werden die Anforderungen an die Meßtechnik begrenzt. Die dadurch bedingte zeitliche Verlängerung des Meßvorgangs ist von untergeordneter Bedeutung. In Anlagen, in denen die prozeßbedingte Partikelkonzentration im Rohgasvolumenstrom zu Kontrollzwecken nicht ausreicht, ist es sinnvoll, wenn die Erzeugung der Rohgaspartikel mittels eines Aerosolgenerators erfolgt, der so angeordnet ist, daß eine homogene Verteilung des aufgegebenen Aerosols im Rohgas bei Eintritt in die Filteranordnung vorliegt.

Ferner ist vorgesehen, daß die Bewegung des Absaugelements mit Hilfe einer Verfahreinrichtung erfolgt, mit der ein Abblaselement zur Abreinigung des Filterelements durch eine der Strömungsrichtung im Filterbetrieb entgegengesetzten Druckbeaufschlagung über den Abströmquerschnitt verfahren wird. Der apparative Aufwand zur Umsetzung des erfindungsgemäßen Verfahrens kann hierdurch deutlich gesenkt werden, da die bei einer Vielzahl von Filtereinrichtungen ohnehin vorhandene Verfahreinrichtung nun in Doppelfunktion genutzt werden kann.

Eine Vorrichtung zur Bestimmung des Abscheidegrades eines in Betrieb und/oder in Einbauposition befindlichen Filterelements zur Abscheidung von Aerosolen aus einem Gasvolumenstrom weist eine auf der Rohgasseite der Vorrichtung angeordnete erste Entnahmeeinrichtung und eine von dieser mit Rohgas versorgbaren Meßeinrichtung zur Messung der Partikelkonzentration $c_1$ des Rohgases, eine auf der Reingasseite der Vorrichtung angeordnete zweite Entnahmevorrichtung und eine von dieser versorgbaren Meßeinrichtung zur Messung der Partikelkonzentration $c_2$ des Reingases sowie eine Auswerteeinrichtung zur Bestimmung des Abscheidegrades A gemäß der Formel

$$A \quad = \quad 1 - \frac{c_2}{c_1}$$

auf und ist erfindungsgemäß dadurch gekennzeichnet, daß die zweite Entnahmeeinrichtung ein Absaugelement ist, das mit seinem Eintrittsquerschnitt über den gesamten Strömungsquerschnitt verfahrbar ist.

Mit der erfindungsgemäßen Vorrichtung läßt sich das Verfahren des Scannens des Abströmquerschnitts auf einfache Weise durchführen, um auf diese Weise Aussagen über die über den gesamten Querschnitt gemittelte Partikelkonzentration und/oder - bei hinreichend kleinem Abstand des Absaugeelements von der Reingasaustrittsebene - über die lokale Wirksamkeit des Filterelements treffen zu können. Auch für eine Dauerüberwachung von in Betrieb befindlichen Filteranlagen ist die zuvor angegebene Vorrichtung sehr gut geeignet.

Sofern der gerätetechnische Aufwand minimiert werden soll, ist es sinnvoll, daß die Partikelkonzentration $c_1$ und die Partikelkonzentration $c_2$ mit derselben Meßeinrichtung meßbar sind.

Gemäß einer Ausgestaltung der erfindungsgemäßen Vorrichtung ist vorgesehen, daß das Absaugelement ein in Längsrichtung geschlitztes Rohr ist, dessen offene Seite entgegen der Strömungsrichtung weist. Eine derartige Ausbildung des Absaugelements zeichnet sich durch ihre einfache Herstellbarkeit aus. Das Querschnittsverhältnis Rohr : Schlitz ist so gewählt, daß über der gesamten Länge des Absaugelements annähernd eine isokinetische Absaugung erreicht wird.

Wenn das Absaugelement im Längsschnitt trichterförmig ist und die Verbindung zu der Meßeinrichtung für das Reingas von der am weitesten von der Reingasaustrittsebene der Filterzelle entfernten Stelle des Absaugelements ausgeht, kann das Absaugelement schmaler ausgebildet werden mit geringerer Störung der Abströmung, und es kann über die gesamte Länge des Absaugelements eine Strömung mit ungefähr identischer Komponente in Abströmrichtung des Reingases erzielt werden, so daß sich das Ideal der isokinetischen Abströmung weitestgehend erreichen läßt.

Eine Weiterbildung der Vorrichtung sieht vor, daß das Absaugelement in Längsrichtung in mehrere Sektionen unterteilt ist, die jeweils separat mit der Meßeinrichtung für das Reingas verbindbar sind. Hierdurch lassen sich extrem teure Meßeinrichtungen mit sehr großen Meßvolumenströmen vermeiden, und die isokinetischen Absaugbedingungen können dennoch eingehalten werden.

Ferner ist es besonders sinnvoll, das Absaugelement senkrecht zu seiner Längsrichtung über den Abströmquerschnitt der Filteranordnung hinaus verfahren zu können, um auch eventuelle Volumenströme, die seitlich an der Filteranordnung vorbeitreten und in der Regel aus Leckagen im Bereich des Dichtsitzes eines Filterelements resultieren, erfassen zu können.

Die Erfindung weiter ausgestaltend ist vorgesehen, daß das Absaugelement an einer Verfahreinrichtung relativ zu dieser bewegbar angeordnet ist, und die Verfahreinrichtung parallel zu der Reingasaustrittsebene und senkrecht zu der Bewegungsrichtung des Absaugelements verfahrbar ist. Auf diese Weise läßt sich eine Art zweidimensionales Scanning erzielen, so daß sich auch vergleichsweise große Filterflächen mit einem relativ kleinen Absaugelement effizient abscannen lassen.

Das Absaugelement kann mit einem mit einem Trum parallel zu der Reingasaustrittsebene verlaufenden Zugmitteltrieb verbunden sein, der entweder manuell oder motorisch antreibbar ist. Die Bewegung des Absaugelements kann gleichförmig oder auch schrittweise erfolgen.

Schließlich wird noch vorgeschlagen, mehrere nebeneinander angeordnete Absaugelemente gleichzeitig in parallele Richtung zu verfahren und wahlweise mit der Meßeinrichtung für das Reingas zu verbinden. Die getrennte Verbindbarkeit der einzelnen Absaugelemente mit der Meßeinrichtung hat den Vorteil, daß die Meßeinrichtung lediglich für vergleichsweise kleine Volumenströme ausgelegt sein muß. Die gleichzeitige Verfahrbarkeit mehrerer Absaugelemente führt zu einer verfahrenstechnischen Vereinfachung, da hinsichtlich des Antriebs der Absaugelemente keine Differenzierung zwischen momentan aktiven und momentan inaktiven Absaugelementen vorgenommen werden muß.

Das erfindungsgemäße Verfahren wird nachfolgend anhand mehrerer Ausführungsbeispiele einer Vorrichtung gemäß der Erfindung näher beschrieben. Es zeigt:

Figur 1     eine Seitenansicht einer Vorrichtung im Schnitt

Figur 2     eine Draufsicht auf die Vorrichtung gemäß Figur 1, ebenfalls im Schnitt

Figur 3     eine Draufsicht auf ein Absaugelement

Figur 4     einen Querschnitt durch das Absaugelement gemäß Figur 3

Figur 5     eine Seitenansicht eines alternativen Absaugelements

Figur 6     eine Draufsicht auf ein weiteres alternatives Absaugelement

Figur 7     eine Vorrichtung zur Verwendung bei einer Filterwand mit drei Absaugelementen und

Figur 8     wie Figur 7, jedoch mit einem einzigen Absaugelement.

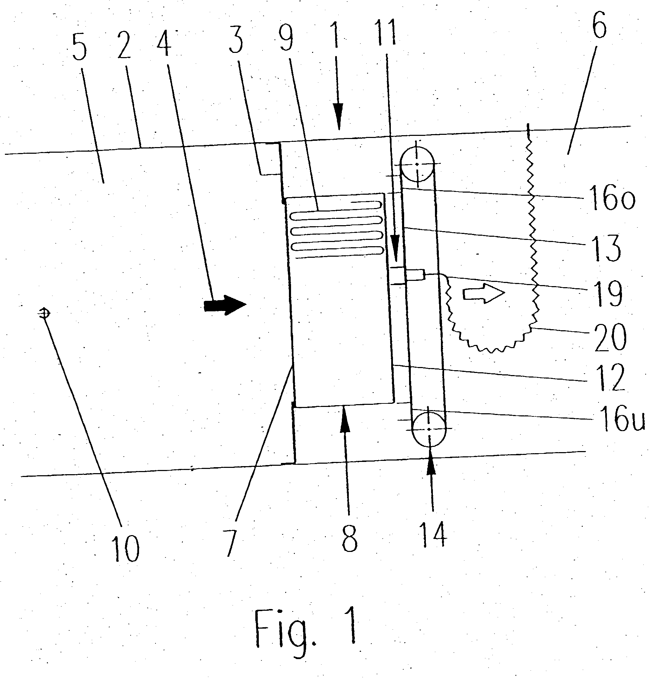

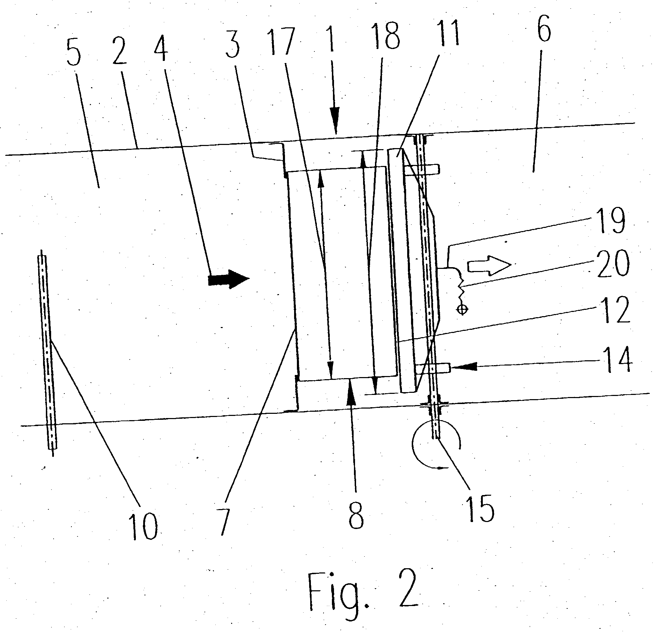

Eine in den Figuren 1 und 2 dargestellte Vorrichtung 1 zur Bestimmung des Abscheidegrades einer in Betrieb befindlichen Filteranordnung ist in einen Abluftkanal 2 eingebaut. Der Abluftkanal 2 wird von einer Trennwand 3 in einen in Strömungsrichtung (Pfeil 4 ) davor befindlichen Rohgasbereich 5 und einen dahinterliegenden Reingasbereich 6 unterteilt. Die Trennwand ist mit einer mittigen Durchtrittsöffnung 7 versehen und trägt auf deren Rand, umlaufend mittels einer Dichtung abgedichtet, ein quaderförmiges Filterelement 8, in dessen Inneren sich ein mäanderförmig geformtes flächiges Filtermedium 9 befindet.

Die Vorrichtung 1 umfaßt eine erste Entnahmeeinrichtung 10 in Form eines Rohres, mit der aus dem Rohgasbereich 5 aus der Mitte des Strömungsquerschnitts Rohgas entnehmbar ist und über eine nicht dargestellte Leitung einer Meßeinrichtung zur Messung der Partikelkonzentration $c_1$ des Rohgases zuführbar ist. Die Meßeinrichtung ist mit einer Auswerteeinrichtung verbunden.

Die Vorrichtung 1 weist des weiteren eine zweite Entnahmeeinrichtung in Form eines Absaugelements 11 auf, das in geringem Abstand von der Reingasaustrittsebene 12 des Filterelements 8 verfahrbar ist. Zu diesem Zweck ist das Absaugelement 11 mit einem Trum 13 jeweils eines Zugmitteltriebs 14 gekoppelt. Die Zugmitteltriebe 14 befinden sich in der Nähe beider Enden des Absaugelements 11 und werden von einer gemeinsamen Welle 15 angetrieben.

Aus Figur 1 ergibt sich, daß das Absaugelement 11 mittels des Zugmittelstriebs 14 zwischen den Totpunktlagen 160 und 16 u parallel verfahrbar ist. Dabei sind die Totpunktlagen 16 o und 16 u so ausgewählt, daß sich das Absaugelement 11 vollständig neben dem Abströmquerschnitt des Filterelements befindet, so daß auf diese Weise auch Partikel erfaßbar sind, die durch einen eventuell defekten Dichtsitz des Filterelements 8 im Bereich der Trennwand 3 stammen.

Um auch die seitlich neben dem Filterelement 8 befindlichen Randbereiche erfassen zu können, ist - wie sich anschaulich aus Figur 2 ergibt - die Länge 17 des Filterelements 8 kleiner als die Länge 18 des Absaugelements 11. Ferner ergibt sich, daß das Absaugelement 11 in seiner Länge dachförmig bzw. trapezförmig ausgebildet ist, um möglichst gleichförmige Einströmbedingungen sicherzustellen. An dem der Reingasaustrittsebene 12 abgewandten Ende des Absaugelements 11 befindet sich ein Anschluß 19, von dem eine Verbindungsleitung 20 zu einer Meßeinrichtung zur Bestimmung der Partikelkonzentration $c_2$ des Reingases ausgeht. Aus Kostenersparnisgründen wird zur zeitlich nacheinander durchgeführten Bestimmung der Konzentration $c_1$ und $c_2$ dieselbe Meßeinrichtung verwendet. Die Verwendung zweier getrennter Meßeinrichtungen ist ebenfalls möglich, die dann beide mit der Auswerteeinrichtung in Verbindung stehen.

Aus Figur 1 geht noch hervor, daß das Absaugelement 11 einen im Einströmbereich in etwa quadratischen Querschnitt besitzt, der in dem dachförmigen Bereich von einem rechteckförmigen Querschnitt abgelöst wird.

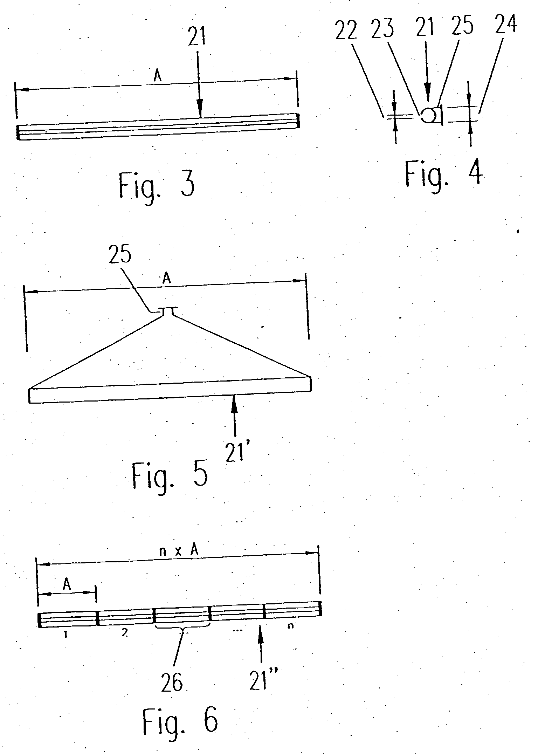

In den Figuren 3 und 4 ist ein alternatives Absaugelement 21 dargestellt, dessen Einströmbereich aus einem geschlitzten Rohr mit einem C-förmigen Querschnitt besteht (vgl. Figur 4). Um nahezu isokinetische Absaugbedingungen zu realisieren, beträgt die Breite 22 des Schlitzes 23 ca. 3 bis 5 % der Breite 24 des Rohres.

Wie sich des weiteren aus Figur 5 ergibt, besitzt ein alternatives Absaugelement 21' mit rechteckigem Querschnitt eine Dachform, um über die gesamte Breite eine Strömung mit im wesentlichen gleicher Strömungskomponente in Richtung senkrecht zu dem Schlitz 23 zu erhalten. Das in Figur 5 dargestellte alternative Absaugelement 21' ist mit einem Anschluß 25 versehen, an dem die Verbindungsleitung zu einem Kupplungsstück in der Gehäusewand führt, in das die Zuleitung der Meßeinrichtung zur Bestimmung der Partikelkonzentration $c_2$ angeschlossen wird. Die Abströmung des aufgenommenen Meßvolumenstroms kann - in Längsrichtung des Absaugelements 21 betrachtet - an nahezu beliebiger Stelle erfolgen.

Figur 6 zeigt ein alternatives Absaugelement 21", das aus einer Mehrzahl von Einzelsegmenten 26 zusammengesetzt ist, welche in einer Reihe fluchtend zueinander ausgerichtet sind. Jedem dieser Einzelsegmente 26 ist ein Anschluß und eine Verbindungsleitung zu einer Meßeinrichtung zugeordnet. Um insbesondere bei Filteranordnungen mit großen Abströmquerschnitten den einer Meßeinrichtung zuzuleitenden Volumenstrom zu begrenzen, wird nacheinander jeweils nur das Reingas durch eines der Einzelsegmente 26 aufgenommen und analysiert.

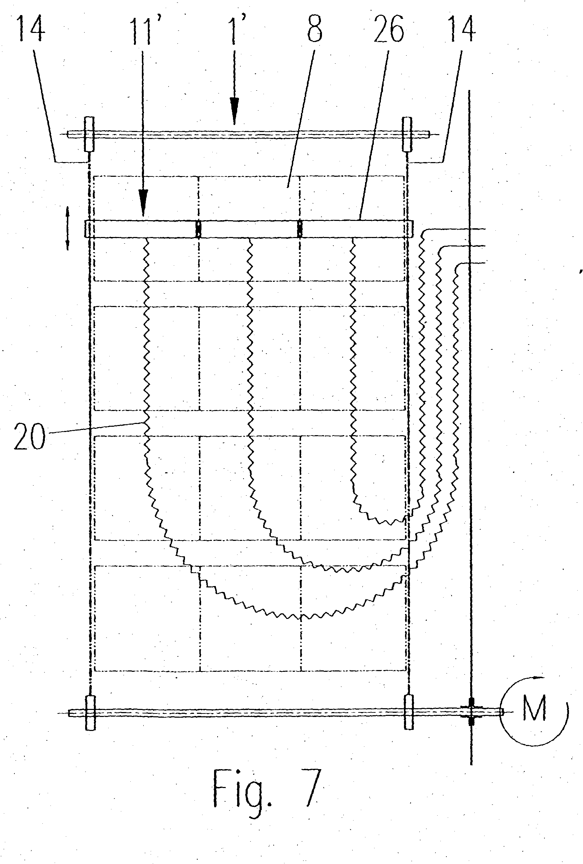

Figur 7 veranschaulicht den Aufbau einer alternativen Vorrichtung 1', bei der insgesamt 12 Filterelemente 8 zu einer sogenannten Filterwand zusammengesetzt sind. Das Absaugelement 11' besteht aus drei Einzelelementen 26, die jeweils mit einer Verbindungsleitung 20 versehen sind.

Das Absaugelement 11' ist mit Hilfe zweier Zugmitteltriebe 14 vertikal verfahrbar, wobei die gesamte Höhe der Filterwand abgefahren werden kann. Da die Länge des Absaugelements 11' größer als die Breite der Filterwand ist, wird im Laufe der Bewegung des Absaugelements 11' von dessen oberer zu dessen unterer Tolstellung der gesamte Abströmquerschnitt der Filterwand überstrichen.

Um jeweils nur einen vergleichsweise geringen Reingasvolumenstrom analysieren zu müssen, sind zeitlich hintereinander drei vertikale Verfahrbewegungen des Absaugelements 11' erforderlich, bei denen jeweils nur Reingas aus einem Einzelsegment 26 analysiert wird.

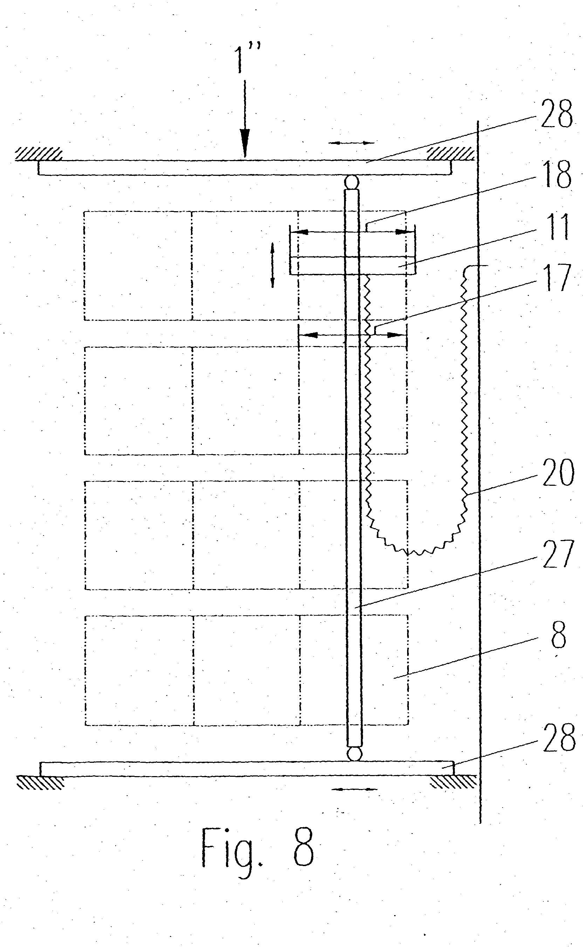

Bei der in Figur 8 dargestellten Vorrichtung 1" ist ein Absaugelement 11 vorhanden, das nicht in Segmente unterteilt ist und daher nur eine einzige Verbindungsleitung 20 besitzt. Das Absaugelement ist an einer vertikalen Führungseinrichtung 27 befestigt, an welche es mittels eines nicht dargestellten Antriebs in vertikaler Richtung verfahrbar ist. Die Führungseinrichtung 27 ist mit ihren Enden wiederum in jeweils einer horizontalen Führungseinrichtung 28 gelagert und Hilfe ebenfalls nicht dargestellter Antriebsmittel in horizontale Richtung verfahrbar.

Ausgehend von der in Figur 8 gezeigten Position der Führungseinrichtung 27 wird das Absaugelement 11 zunächst von seinem oberen Totpunkt zu seinem unteren Totpunkt verfahren, um auf diese Weise die vier Filterelemente 8 zu überstreichen, die eine rechte Spalte der aus insgesamt acht Filterelementen bestehenden Filterwand bilden. Sodann wird die Führungseinrichtung 27 um die Länge eines Filterelements 8 nach links verschoben, um mit einer weiteren Verfahrbewegung des Absaugelements 11 die mittlere Reihe der Filterelemente 8 zu überstreichen. Anschließend wird der Meßvorgang an der linken Reihe der Filterelemente 8 fortgesetzt. Die Länge 18 des Absaugelements 8 ist wiederum größer als die Länge 17 der Filterelemente 8, so daß auch Partikel, die durch Undichtigkeiten im Bereich der umlaufenden Dichtungen der Filterelemente 8 in den Reingasraum eintreten können, erfaßt werden können.

Auch sind der obere und der untere Totpunkt des Absaugelements außerhalb des eigentlichen Abströmquerschnitts der jeweiligen Filterelemente 8 angeordnet.

**Patentansprüche**

1. Verfahren zur Bestimmung des Abscheidegrades einer in Betrieb und/oder in ihrer Einbauposition befindlichen Filteranordnung zur Abscheidung von Aerosolen aus einem Gasvolumenstrom, wobei in Strömungsrichtung des Gasvolumenstroms betrachtet vor der Filteranordnung die Partikelkonzentration $c_1$ des Rohgases und in Strömungsrichtung des Gasvolumenstroms hinter der Eilteranordnung die Partikelkonzentration $c_2$ des Reingases gemessen und aus den beiden vorgenannten Konzentrationen der Abscheidegrad A nach der Formel

$$A \quad = \quad 1 - \quad \frac{c_2}{c_1}$$

bestimmt wird, dadurch gekennzeichnet, daß die Aufnahme eines Teilvolumenstroms des Reingases mittels eines Absaugelements erfolgt, das während eines vollständigen Meßvorgangs mindestens den gesamten Strömungsquerschnitt überstreicht.

2. Verfahren nach Anspruch 1, dadurch gekennzeichnet, daß das Absaugelement in geringem Abstand von der Reingasaustrittsebene der Filteranordnung bewegt wird.

3. Verfahren nach Anspruch 1 oder 2, dadurch gekennzeichnet, daß das Absaugelement linear bewegt wird.

4. Verfahren nach einem der Ansprüche 1 bis 3, dadurch gekennzeichnet, daß das Absaugelement mit konstanter Geschwindigkeit bewegt wird.

5. Verfahren nach einem der Ansprüche 1 bis 4, dadurch gekennzeichnet, daß die Aufnahme des zu messenden Teilvolumenstroms des Reingases in das Absaugelement isokinetisch erfolgt.

6. Verfahren nach einem der Ansprüche 1 bis 5, dadurch gekennzeichnet, daß ein an einer Dichtung der Filteranordnung vorbeitretender ungefilterter Teilvolumenstrom in bestimmten Stellungen des Absaugelements von diesem aufgenommen wird.

7. Verfahren nach einem der Ansprüche 1 bis 6, dadurch gekennzeichnet, daß die von mehreren Absaugelementen oder von strömungstechnisch getrennten Sektionen eines Absaugelements aufgenommenen Teilvolumenströme nacheinander und getrennt voneinander einer Meßeinrichtung zugeführt werden.

8. Verfahren nach einem der Ansprüche 1 bis 7, dadurch gekennzeichnet, daß die Erzeugung der Rohgaspartikel mittels eines Aerosolgenerators erfolgt, der so angeordnet ist, daß eine homogene Verteilung des aufgegebenen Aerosols im Rohgas bei Eintritt in die Filteranordnung vorliegt.

9. Verfahren nach einem der Ansprüche 1 bis 8, dadurch gekennzeichnet, daß die Bewegung des Absaugelements mit Hilfe einer Verfahreinrichtung erfolgt, mit der ein Abblaselement zur Abreinigung der Filteranordnung durch eine der Strömungsrichtung im Filterbetrieb entgegengesetzte Druckbeaufschlagung über den Abströmquerschnitt verfahren wird.

10. Vorrichtung zur Bestimmung des Abscheidegrades einer in Betrieb und/oder in Einbauposition befindlichen Filteranordnung zur Abscheidung von Aerosolen aus einem Gasvolumenstrom mit einer auf der Rohgasseite der Vorrichtung angeordneten ersten Entnahmeeinrichtung und einer von dieser versorgbaren Meßeinrichtung zur Messung der Partikelkonzentration $c_1$ des Rohgases mit einer auf der Reingasseite der Vorrichtung angeordneten zweiten Entnahmevorrichtung und einer von dieser versorgbaren Meßeinrichtung zur Messung der Partikelkonzentration $c_2$ des Reingases sowie eine Auswerteeinrichtung zur Bestimmung des Abscheidegrades A gemäß der Formel

$$A \quad = \quad 1 - \quad \frac{}{c_1}$$

dadurch gekennzeichnet, daß die zweite Entnahmeeinrichtung ein Absaugelement (11, 11', 21, 21', 21") ist, das mit seinem Eintrittsquerschnitt über den gesamten Strömungsquerschnitt verfahrbar ist.

**11.** Vorrichtung nach Anspruch 10, dadurch gekennzeichnet, daß die Partikelkonzentration $c_1$ und die Partikelkonzentration $c_2$ mit derselben Meßeinrichtung meßbar sind.

**12.** Vorrichtung nach Anspruch 10 oder 11, dadurch gekennzeichnet, daß das Absaugelement (21) ein in Längsrichtung geschlitztes Rohr ist, dessen offene Seite entgegen der Strömungsrichtung weist.

**13.** Vorrichtung nach Anspruch 10 bis 12, dadurch gekennzeichnet, daß das Absaugelement (11, 11', 21') im Längsschnitt trichter- oder dachförmig ist und die Verbindung zu der Meßeinrichtung für das Reingas von der am weitesten von der Reingasaustrittsebene der Filteranordnung entfernten Stelle des Absaugelements (11, 11', 21') ausgeht.

**14.** Vorrichtung nach einem der Ansprüche 10 bis 13, dadurch gekennzeichnet, daß das Absaugelement (21'') in Längsrichtung in mehrere Sektionen unterteilt ist, die jeweils separat mit der Meßeinrichtung für das Reingas verbindbar sind.

**15.** Vorrichtung nach einem der Ansprüche 10 bis 14, dadurch gekennzeichnet, daß das Absaugelement (11, 11', 21, 21', 21'') senkrecht zu seiner Längsrichtung über den Abströmquerschnitt der Filteranordnung hinaus verfahrbar ist.

**16.** Vorrichtung nach einem der Ansprüche 10 bis 15, dadurch gekennzeichnet, daß das Absaugelement (11) an einer Verfahreinrichtung relativ zu dieser bewegbar angeordnet ist und die Verfahreinrichtung parallel zu der Reingasaustrittsebene und senkrecht zu der Bewegungsrichtung des Absaugelements (11) verfahrbar ist.

**17.** Vorrichtung nach einem der Ansprüche 10 bis 16, dadurch gekennzeichnet, daß das Absaugelement (11, 11') mit einem mit einem Trum parallel zu der Reingasaustrittsebene verlaufenden Zugmitteltrieb (14) verbunden ist.

**18.** Vorrichtung nach einem der Ansprüche 10 bis 17, dadurch gekennzeichnet, daß mehrere nebeneinander angeordnete Absaugelemente (11') gleichzeitig in parallele Richtung verfahrbar und wahlweise mit der Meßeinrichtung für das Reingas verbindbar sind.

**19.** Vorrichtung nach einem der Ansprüche 10 bis 18, dadurch gekennzeichnet, daß das Absaugelement (11, 11', 21, 21', 21'') in geringem Abstand von der Reingasaustrittsebene der Filteranordnung bewegbar ist.

Fig. 1

Fig. 2

Fig. 3

Fig. 4

Fig. 5

Fig. 6

Fig. 7

1''

28

18

11

17

20

27

8

28

# Fig. 8

Europäisches
Patentamt

**EUROPÄISCHER RECHERCHENBERICHT**

Nummer der Anmeldung

EP 00 10 9857

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 494 403 A (BOWERS CECIL W ET AL) 22. Januar 1985 (1985-01-22) * Spalte 1, Zeile 15 - Spalte 2, Zeile 54; Ansprüche; Abbildungen * --- | 1-19 | B01D46/44 G01N15/08 G01M3/20 B01D65/10 B01D29/60 F24F3/16 |
| A | US 4 515 007 A (HERMAN RAYMOND L) 7. Mai 1985 (1985-05-07) * Spalte 1, Zeile 16 - Spalte 4, Zeile 37 * --- | 1-19 | |
| A | US 4 324 568 A (WILCOX DAVID E ET AL) 13. April 1982 (1982-04-13) * Spalte 1, Zeile 7 - Spalte 4, Zeile 44 * --- | 1-19 | |
| A | US 4 875 360 A (ZIEMER WOLF) 24. Oktober 1989 (1989-10-24) * das ganze Dokument * ----- | 1-19 | |

**RECHERCHIERTE SACHGEBIETE (Int.Cl.7)**

B01D
G01N
G01M
F24F

Der vorliegende Recherchenbericht wurde für alle Patentansprüche erstellt

| Recherchenort | Abschlußdatum der Recherche | Prüfer |
|---|---|---|
| MÜNCHEN | 7. August 2000 | Persichini, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 10 9857

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-08-2000

| Im Recherchenbericht angeführtes Patentdokument | Datum der Veröffentlichung | Mitglied(er) der Patentfamilie | Datum der Veröffentlichung |
|---|---|---|---|
| US 4494403 A | 22-01-1985 | AU 1685783 A<br>CA 1207606 A<br>EP 0099129 A<br>JP 59046532 A | 19-01-1984<br>15-07-1986<br>25-01-1984<br>15-03-1984 |
| US 4515007 A | 07-05-1985 | KEINE | |
| US 4324568 A | 13-04-1982 | US RE31952 E | 23-07-1985 |
| US 4875360 A | 24-10-1989 | DE 3715214 A<br>EP 0289989 A<br>JP 63296815 A | 17-11-1988<br>09-11-1988<br>02-12-1988 |

EPO FORM P0461

Für nähere Einzelheiten zu diesem Anhang : siehe Amtsblatt des Europäischen Patentamts, Nr. 12/82